(19) Europäisches Patentamt
European Patent Office
Office européen des brevets

(11) **EP 4 386 901 A1**

(12) **EUROPEAN PATENT APPLICATION**
published in accordance with Art. 153(4) EPC

(43) Date of publication:
**19.06.2024 Bulletin 2024/25**

(21) Application number: **23827565.5**

(22) Date of filing: **23.06.2023**

(51) International Patent Classification (IPC):
*H01M 4/36* [(2006.01)]    *H01M 4/38* [(2006.01)]
*H01M 4/13* [(2010.01)]    *H01M 4/62* [(2006.01)]
*H01M 10/052* [(2010.01)]    *H01M 4/02* [(2006.01)]

(52) Cooperative Patent Classification (CPC):
H01M 4/02; H01M 4/13; H01M 4/36; H01M 4/38;
H01M 4/62; H01M 10/052

(86) International application number:
**PCT/KR2023/008778**

(87) International publication number:
**WO 2023/249457 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.06.2022   KR 20220076854
07.06.2023   KR 20230073152**

(71) Applicant: **LG Energy Solution, Ltd.
Seoul 07335 (KR)**

(72) Inventor: **YANG, Seung-Bo
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **SULFUR-CARBON COMPOSITE FOR LITHIUM-SULFUR BATTERY AND LITHIUM-SULFUR BATTERY INCLUDING SAME**

(57)    The present disclosure relates to a carbon composite for use in a positive electrode of a lithium sulfur battery. Disclosed is a sulfur-carbon composite including: a porous carbonaceous matrix; and a sulfur-containing compound supported at least partially in the pores of the porous carbonaceous matrix and on the external surface thereof, wherein the porous carbonaceous matrix includes a sheet-like carbonaceous material and has a specific surface area of 1,000 $m^2$/g or more and a pore volume of 6 $cm^3$/g or more. Also disclosed are a positive electrode active material including the sulfur-carbon composite, a positive electrode including the same and a lithium sulfur battery including the same.

FIG. 1

**Description**

TECHNICAL FIELD

The present disclosure relates to a sulfur-carbon composite for a lithium sulfur battery and a lithium sulfur battery including the same.

The present application claims priority to Korean Patent Application No. 10-2022-0076854 filed on June 23, 2022 and Korean Patent Application No. 10-2023-0073152 filed on June 7, 2023 in the Republic of Korea, the disclosures of which are incorporated herein by reference.

BACKGROUND ART

A lithium sulfur battery is a battery system using a sulfur-based material having a sulfur-sulfur (S-S) bond as a positive electrode active material and lithium metal as a negative electrode active material. Sulfur as a main ingredient of the positive electrode active material is advantageous in that it is rich in resources all over the world, has no toxicity and shows a low atomic weight.

As the spectrum of application of secondary batteries is extended to electric vehicles (EVs), energy storage systems (ESSs), or the like, the technology of lithium sulfur batteries capable of realizing a theoretically higher energy storage density per weight (~2,600 Wh/kg), as compared to lithium-ion secondary batteries having a relatively lower energy storage density per weight (~250 Wh/kg), has been spotlighted.

In the lithium sulfur battery, during discharge, while lithium as a negative electrode active material donates an electron and is ionized and oxidized into a lithium cation, a sulfur-based material as a positive electrode active material accepts the electron and is reduced. Herein, the S-S bond accepts two electrons through the reduction of the sulfur-based material and is converted into a sulfur anion form. The lithium cation produced by the oxidation of lithium is transferred to a positive electrode through an electrolyte, and is bound with the sulfur anion produced by the reduction of the sulfur-based compound to form a salt. Particularly, sulfur before discharge has a cyclic $S_8$ structure, which is converted into lithium polysulfide ($Li_2S_x$) through the reduction and is reduced completely to produce lithium sulfide ($Li_2S$).

As such, since sulfur used for the positive electrode active material is an insulator, a porous carbonaceous material has been studied as a carrier of sulfur in order to improve the reactivity of sulfur. In order to improve the dynamic activity of electrochemical reaction during the charge/discharge of a lithium sulfur secondary battery, there has been a continuous need for technological development of a sulfur-carbon composite including a positive electrode active material supported in a porous carbonaceous material as a positive electrode material.

Meanwhile, in order to develop a lithium sulfur secondary battery having high energy density, it is required to develop a sulfur-carbon composite capable of realizing a low-porosity electrode.

The sulfur-carbon composite used for a lithium sulfur secondary battery has a structure including a sulfur-containing compound supported in a porous carbonaceous material used as a matrix. Herein, when using a porous carbonaceous material having a large specific surface area in order to increase the loading amount of sulfur, it causes a decrease in tap density during the formation of an electrode, a drop in compressing ratio during the pressing and an electrode swelling phenomenon, which makes it difficult to manufacture and commercialize electrodes.

Therefore, there have been conducted continuous research and development of sulfur-carbon composites having various physical properties for use in a lithium sulfur battery.

DISCLOSURE

Technical Problem

The present disclosure is designed to solve the problems of the related art, and therefore the present disclosure is directed to providing a sulfur-carbon composite which shows enhanced dynamic activity of oxidation/reduction of sulfur by using a carrier having a large specific surface area and pore volume.

Particularly, the present disclosure is directed to providing a sulfur-carbon composite using a sheet-like carbonaceous material having excellent packing density as well as a large specific surface area and pore volume.

Therefore, the present disclosure is directed to providing an electrode for a lithium sulfur battery having low porosity and a high-performance lithium sulfur secondary battery.

Technical Solution

In one aspect of the present disclosure, there is provided a sulfur-carbon composite according to any one of the following embodiments.

According to the first embodiment of the present disclosure, there is provided a sulfur-carbon composite including:

a porous carbonaceous matrix as a sulfur carrier; and a sulfur-containing compound supported at least partially in the pores of the porous carbonaceous matrix and on the external surface thereof, wherein the porous carbonaceous matrix includes a sheet-like carbonaceous material and has a specific surface area of 1,000 m$^2$/g or more and a pore volume of 6 cm$^3$/g or more.

According to the second embodiment of the present disclosure, there is provided the sulfur-carbon composite as defined in the first embodiment, wherein the sheet-like carbonaceous material includes graphene, graphene oxide, reduced graphene oxide (rGO), or a mixture of two or more of them.

According to the third embodiment of the present disclosure, there is provided the sulfur-carbon composite as defined in the first or the second embodiment, wherein the porous carbonaceous matrix has a pore volume of 6-15 cm$^3$/g.

According to the fourth embodiment of the present disclosure, there is provided the sulfur-carbon composite as defined in any one of the first to the third embodiments, wherein the porous carbonaceous matrix includes mesopores having an average diameter ($D_{50}$) equal to or larger than 1 nm and less than 50 nm and macropores having an average diameter ($D_{50}$) of 50-200 nm.

According to the fifth embodiment of the present disclosure, there is provided the sulfur-carbon composite as defined in any one of the first to the fourth embodiments, wherein the pores of the porous carbonaceous matrix have an average diameter ($D_{50}$) of 20-25 nm.

According to the sixth embodiment of the present disclosure, there is provided the sulfur-carbon composite as defined in any one of the first to the fifth embodiments, wherein the sulfur-containing compound includes inorganic sulfur (Ss), lithium polysulfide (Li$_2$S$_n$, $1 \le n \le 8$), carbon-sulfur polymer (($C_2S_x$)$_m$, $2.5 \le x \le 50$, $2 \le m$ ), or a mixture thereof.

According to the seventh embodiment of the present disclosure, there is provided the sulfur-carbon composite as defined in any one of the first to the sixth embodiments, wherein the content of the sulfur-containing compound is 75 wt% or more based on the total weight of the sulfur-carbon composite.

In another aspect of the present disclosure, there is provided a positive electrode according to any one of the following embodiments.

According to the eighth embodiment of the present disclosure, there is provided a positive electrode including the sulfur-carbon composite as defined in any one of the first to the seventh embodiments as a positive electrode active material.

According to the ninth embodiment of the present disclosure, there is provided the positive electrode as defined in the eighth embodiment, which has a porosity of 70 vol% or less.

According to the tenth embodiment of the present disclosure, there is provided the positive electrode as defined in the eighth or the ninth embodiment, which has a porosity of 30 vol% or less.

In still another aspect of the present disclosure, there is provided a lithium sulfur battery according to the following embodiment.

According to the eleventh embodiment of the present disclosure, there is provided a lithium sulfur battery including a positive electrode, a negative electrode, a separator interposed between the positive electrode and the negative electrode, and an electrolyte, wherein the positive electrode includes a positive electrode including the sulfur-carbon composite as defined in any one of the first to the seventh embodiments as a positive electrode active material.

Advantageous Effects

The sulfur-carbon composite according to an embodiment of the present disclosure provides excellent dynamic activity to the oxidation/reduction of sulfur. For example, the sulfur-carbon composite is effective for enhancing the reactivity of sulfur by supporting sulfur in a porous carbonaceous matrix having enhanced active sites in which sulfur can participate in the reaction by virtue of a high specific surface area.

In addition, the sulfur-carbon composite allows sulfur to be supported easily by virtue of a large pore volume of the porous carbonaceous matrix, and is favorable to ensuring an ion diffusion path.

The sulfur-carbon composite shows a high content of sulfur supported therein and includes a sheet-like carbonaceous material having a large specific surface area, and thus an electrode using the sulfur-carbon composite as a positive electrode active material shows improved packing density in the sulfur-carbon composition, thereby realizing low porosity.

In this manner, it is possible to provide a lithium sulfur secondary battery having high energy density.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a graph illustrating the results of evaluation of the pore characteristic of the porous carbonaceous matrix used for manufacturing each of Example 1 and Comparative Examples 1 and 2 as described hereinafter.

FIG. 2 is a graph illustrating the results of evaluation of the initial capacity of each of Example 1 and Comparative Examples 1-3 as described hereinafter.

FIG. 3 is a graph illustrating the results of evaluation of the battery life through the determination of the charge/discharge characteristics of each of Example 1 and Comparative Examples 1-3 as described hereinafter, after the battery is operated six times and is subjected to further charge/discharge cycles.

BEST MODE

Hereinafter, preferred embodiments of the present disclosure will be described in detail. However, the description proposed herein is just a preferable example for the purpose of illustrations only, not intended to limit the scope of the disclosure, and each constitutional element may be modified diversely or may be combined optionally. Therefore, it should be understood that other equivalents and modifications could be made thereto without departing from the scope of the disclosure.

Throughout the specification, the expression 'a part includes element' does not preclude the presence of any additional elements but means that the part may further include the other elements.

As used herein, the expression 'A and/or B' means 'A, B or both of them'.

In one aspect of the present disclosure, there is provided a sulfur-carbon composite which can be used as a positive electrode material of a lithium sulfur secondary battery.

According to an embodiment of the present disclosure, the sulfur-carbon composite includes: a porous carbonaceous matrix as a sulfur carrier; and a sulfur-containing compound supported at least partially in the pores of the porous carbonaceous matrix and on the external surface thereof.

The sulfur-carbon composite according to the present disclosure may be used as a positive electrode material in itself at a positive electrode, or may be incorporated as a catalyst for enhancing the activity of a positive electrode active material separately from the positive electrode active material, and the use of the sulfur-carbon composite is not limited thereto.

The sulfur-carbon composite according to an embodiment of the present disclosure includes: a porous carbonaceous matrix as a sulfur carrier; and a sulfur-containing compound supported at least partially in the pores of the porous carbonaceous matrix and on the external surface thereof, wherein the porous carbonaceous matrix includes a sheet-like carbonaceous material and has a specific surface area of 1,000 $m^2$/g or more and a pore volume of 6 $cm^3$/g or more.

The porous carbonaceous matrix is characterized in that it has a high specific surface area in order to enhance the active sites in which sulfur can participate oxidation/reduction. In addition, the porous carbonaceous matrix is characterized in that it has a large pore volume so that it allows sulfur to be supported easily and ensures an ion diffusion path advantageously.

The sulfur-carbon composite includes a porous carbonaceous matrix as a carrier to support the sulfur-containing compound. Particularly, the sulfur-carbon composite includes a sheet-like porous carbonaceous material as a porous carbonaceous matrix.

According to an embodiment of the present disclosure, the sheet-like porous carbonaceous material is significantly excellent in terms of packing density as compared to an amorphous porous carbonaceous material or a spherical porous carbonaceous material. Therefore, when using a sulfur-carbon composite including such a sheet-like porous carbonaceous material, it is possible to provide an advantageous effect in realizing a low-porosity electrode, but the mechanism of the present disclosure is not limited thereto.

According to an embodiment of the present disclosure, the sheet-like carbonaceous material may include graphene, graphene oxide, reduced graphene oxide (rGO), or a mixture of two or more of them.

According to an embodiment of the present disclosure, the sheet-like porous carbonaceous material may include reduced graphene oxide alone.

The porous carbonaceous matrix has a specific surface area of 1,000 $m^2$/g or more. Particularly, the BET specific surface area of the porous carbonaceous matrix is not particularly limited in its upper limit. For example, the porous carbonaceous matrix may have a BET specific surface area of 1,000 $m^2$/g to 5,000 $m^2$/g. Particularly, the porous carbonaceous matrix may have a BET specific surface area of 1,000 $m^2$/g to 3,000 $m^2$/g, 1,000 $m^2$/g to 2,000 $m^2$/g, 1,000 $m^2$/g to 1,500 $m^2$/g, 1,000 $m^2$/g to 1,200 $m^2$/g, or 1,000 $m^2$/g to 1,100 $m^2$/g. The sulfur-carbon composite according to the present disclosure includes a plurality of fine pores on the external surface thereof and/or inside thereof, and thus has a significantly large specific surface area advantageously.

The BET specific surface area is determined by the BET method, and may refer to a value determined by a known method for determining a BET specific surface area. For example, The BET specific surface area may be a value calculated from the nitrogen gas adsorption under a liquid nitrogen temperature (77K) by using BELSORP-max available from BEL Japan Co.

The porous carbonaceous matrix includes a plurality of pores having different sizes. Herein, the porous carbonaceous matrix has a total pore volume of 6 $cm^3$/g or more. Particularly, the pore volume of the porous carbonaceous matrix is not particularly limited in its upper limit, as long as it is 6 $cm^3$/g or more. For example, the porous carbonaceous matrix may have a pore volume of 6 $cm^3$/g or more, or 6.5 $cm^3$/g or more. Particularly, the porous carbonaceous matrix may have a pore volume of 6 $cm^3$/g to 15 $cm^3$/g, 6.5 $cm^3$/g to 15 $cm^3$/g, 6 $cm^3$/g to 12 $cm^3$/g, 6 $cm^3$/g to 10 $cm^3$/g, or 6 $cm^3$/g to 8 $cm^3$/g. For example, the pore volume may be a value calculated through the $N_2$ isotherm analysis based on the liquid nitrogen adsorption.

According to an embodiment of the present disclosure, the porous carbonaceous matrix has a large total pore volume and thus can provide an advantageous effect for manufacturing a high-sulfur loading electrode, but the mechanism of the present disclosure is not limited thereto.

As described above, the porous carbonaceous matrix in the sulfur-carbon composite according to an embodiment of the present disclosure includes a plurality of fine pores in order to support the sulfur-containing compound.

According to an embodiment of the present disclosure, the porous carbonaceous matrix includes a plurality of fine pores on the external surface thereof and inside thereof, wherein the fine pores may include mesopores having a diameter equal to or larger than 1 nm and less than 50 nm, and macropores having a diameter of 50-200 nm. According to an embodiment of the present disclosure, the porous carbonaceous matrix preferably includes mesopores and macropores developed homogeneously therein.

The diameter of the fine pores may be determined by a method for determining the pore diameter of a porous material known to those skilled in the art with no particular limitation. For example, the average diameter of the fine pores may be determined by scanning electron microscopy (SEM), field-emission electron microscopy or laser diffraction methods. For example, the average diameter of the fine pores may be determined through the laser diffraction method using a commercially available laser diffraction particle size analyzer (e.g. Microtrac MT 3000).

According to another embodiment of the present disclosure, the total pores of the porous carbonaceous matrix may have an average diameter ($D_{50}$) of 25 nm or less. It is preferred that the fine pores contained in the porous carbonaceous matrix have a uniform size. For this purpose, the upper limit of the average diameter ($D_{50}$) of the fine pores of the porous carbonaceous matrix may be limited to 25 nm. More particularly, the average diameter ($D_{50}$) of the fine pores of the porous carbonaceous matrix may be 5-25 nm, 10-25 nm, 15-25 nm, 20-25 nm, or 23-25 nm, but is not limited thereto. The average diameter ($D_{50}$) of the pores refers to the diameter of the pores at a point of 50% in the pore volume cumulative distribution depending on diameter.

According to the present disclosure, the sulfur-containing compound is contained at least partially inside of the pores of the porous carbonaceous matrix having the above-described characteristics and on the external surface thereof.

Any sulfur-containing compound may be used with no particular limitation, as long as it may be used as a positive electrode active material in a lithium sulfur secondary battery. For example, the sulfur-containing compound may include inorganic sulfur (Ss), lithium polysulfide ($Li_2S_n$, $1 \le n \le 8$), carbon-sulfur polymer(($C_2S_x)_m$, $2.5 \le x \le 50$, $2 \le m$), or a mixture thereof, but is not limited thereto.

The sulfur-containing compound may be incorporated into the sulfur-carbon composite through the physical adsorption with the porous carbonaceous matrix, or chemical bonding, such as covalent bonding between a sulfur element and carbon in the porous carbonaceous matrix, Van der Waals bonding, or the like.

According to an embodiment of the present disclosure, the porous carbonaceous matrix and the sulfur-containing compound may be contained in the sulfur-carbon composite at a weight ratio of 1:9-9: 1, particularly 1:9-5:5, 1:9-4:6, 1:9-3:7, or 1:9-1.5:8.5. When the weight ratio of the porous carbonaceous matrix to the sulfur-containing compound in the sulfur-carbon composite falls within the above-defined range, the sulfur-carbon composite includes the sulfur-containing compound at a high content, thereby increasing the dynamic activity of the sulfur-carbon composite while providing an advantageous effect in terms of improvement of the conductivity derived from the porous carbonaceous matrix. However, the scope of the present disclosure is not limited thereto.

According to another embodiment of the present disclosure, the content of the sulfur-containing compound in the sulfur-carbon composite may be 10 wt% or more, particularly 50 wt% or more, 60 wt% or more, 70 wt% or more, 75 wt% or more, 80 wt% or more, or 85 wt% or more, based on the total weight of the sulfur-carbon composite. In addition, within the above-defined range, the content of the sulfur-containing compound may be 50-95 wt%, particularly 60-90 wt%, 70-90 wt%, 75-90 wt%, 80-90 wt%, or 85-90 wt%, based on the total weight of the sulfur-carbon composite. When the content of the sulfur-containing compound in the sulfur-carbon composite falls within the above-defined range, the sulfur-carbon composite includes the sulfur-containing compound at a high content, thereby increasing the dynamic activity of the sulfur-carbon composite while providing an advantageous effect in terms of improvement of the conductivity derived from the porous carbonaceous matrix. However, the scope of the present disclosure is not limited thereto.

According to an embodiment of the present disclosure, the average particle diameter ($D_{50}$) of the sulfur-carbon composite may be 0.5-200 $\mu$m, 0.5-200 $\mu$m, 1-150 $\mu$m, or 10-150 $\mu$m. The particle diameter of the sulfur-carbon composite may be determined by scanning electron microscopy (SEM), field-emission electron microscopy or laser diffraction methods. For example, the average particle diameter of the sulfur-carbon composite may be determined through the laser diffraction method using a commercially available laser diffraction particle size analyzer (e.g. Microtrac MT 3000). The average particle diameter ($D_{50}$) refers to the particle diameter at a point of 50% in the number cumulative distribution depending on particle size.

According to an embodiment of the present disclosure, the sulfur-carbon composite may have a Raman peak intensity ratio ($I_G/I_D$ ratio) of 2 or less. Particularly, the sulfur-carbon composite may have a Raman peak intensity of 1 or less. For example, when the $I_G/I_D$ ratio is larger than 1, the surface of the sulfur-carbon composite shows high crystallinity to cause the problems of degradation of the composite formation with the sulfur-containing compound or the efficiency of the conversion of lithium polysulfide. However, the scope of the present disclosure is not limited thereto.

The Raman peak intensity ratio may be determined through the $I_G$ and $I_D$ values obtained from the spectrum of the sulfur-carbon composite as analyzed by Raman spectroscopy. In the spectrum, $I_G$ refers to the peak (G-peak, 1573/cm) of a crystalline segment, and $I_D$ refers to the peak (D-peak, 1309/cm) of an amorphous segment. Therefore, a smaller vale of $I_G/I_D$ ratio suggests that the sulfur-carbon composite has lower crystallinity.

According to an embodiment of the present disclosure, the sulfur-carbon composite may be formed by mixing the porous carbonaceous matrix with the sulfur-containing compound and carrying out heat treatment, but the method for preparing the sulfur-carbon composite according to the present disclosure is not limited thereto.

As described above, the sulfur-carbon composite according to the present disclosure includes a sheet-like carbonaceous material having a high specific surface area and large pore volume, and thus shows an enhanced sulfur loading amount and can provide a plurality of active sites for the oxidation/reduction of sulfur. In this manner, when the sulfur-carbon composite is used in the positive electrode of a lithium sulfur battery, it is possible to improve the battery efficiency and energy density. However, the mechanism of the present disclosure is not limited thereto.

In another aspect of the present disclosure, there is provided a positive electrode including the above-described sulfur-carbon composite as a positive electrode active material.

The positive electrode may include the sulfur-carbon composite using the porous carbonaceous matrix as a carrier in which the sulfur-containing compound is support, as a positive electrode active material.

According to another embodiment of the present disclosure, the positive electrode may further include a binder, a conductive material, an additive, or the like, if necessary. Herein, any conventional type of binder, conductive material and additive may be used, and thus detailed description thereof will be omitted.

According to still another embodiment of the present disclosure, the positive electrode may include a positive electrode current collector, and a positive electrode active material layer coated on one surface or both surfaces of the positive electrode current collector and including the positive electrode active material in combination with the binder. However, the structure of the positive electrode is not limited thereto. The positive electrode current collector is not particularly limited, as long as it has high conductivity, while not causing any chemical change in the corresponding battery.

According to an embodiment of the present disclosure, the positive electrode including the sulfur-carbon composite shows excellent effects in terms of sulfur loading amount and sulfur oxidation/reduction activity, but the effects of the present disclosure are not limited thereto.

According to an embodiment of the present disclosure, the positive electrode may have a sulfur (S) loading amount of 1.0 mg/cm$^2$ or more based on the area of the electrode. For example, the sulfur loading amount in the positive electrode may be 1 mg/cm$^2$ or more, 1.5 mg/cm$^2$ or more, 2 mg/cm$^2$ or more, particularly 2-10 mg/cm$^2$. Therefore, when the positive electrode is used in a lithium sulfur battery, it is possible to provide the battery with high-energy density.

According to an embodiment of the present disclosure, the positive electrode includes the sulfur-carbon composite in which the sulfur-containing compound is supported in the porous carbonaceous matrix having high specific surface area and large total pore volume, and thus it is possible to realize high tap density and low porosity upon the formation of the positive electrode. Therefore, the positive electrode can be used for a battery having high energy density.

According to an embodiment of the present disclosure, the positive electrode may have a porosity of 70 vol% or less, 50 vol% or less, or 30 vol% or less. When the porosity of the positive electrode falls within the above-defined range, it is possible to provide an excellent sulfur loading amount and packing density, and thus to show an advantageous effect of providing a battery having high energy density, but the scope of the present disclosure is not limited thereto.

According to an embodiment of the present disclosure, the porosity of the positive electrode is not limited in its lower limit, but the positive electrode may have a porosity of 1 vol% or more, 5 vol% or more, 7 vol% or more, or 10 vol% or more.

According to the present disclosure, the porosity of the positive electrode may be determined by the BET (Brunauer-Emmett-Teller) method using nitrogen gas or Hg porosimetry according to ASTM D-2873. In a variant, the net density of the electrode may be calculated from the density (apparent density) of the electrode, the composition of the ingredients contained in the electrode and the density of each ingredient, and then the porosity of the electrode may be calculated from the difference between the apparent density and the net density. For example, the porosity may be calculated according to the following Formula 1:

[Formula 1]

$$\text{Porosity (vol\%)} = \{1 - (\text{Apparent density/Net density})\} \times 100$$

In Formula 1, the apparent density may be calculated according to the following Formula 2:

Apparent density $(g/cm^3)$=(Weight (g) of porous matrix)/{(Thickness (cm) of porous matrix$\times$Area $(cm^2)$ of porous matrix)}    [Formula 2]

In still another aspect of the present disclosure, there is provided a lithium sulfur battery including a positive electrode, a negative electrode and a separator layer interposed between the positive electrode and the negative electrode, wherein the positive electrode includes the above-described positive electrode.

According to an embodiment of the present disclosure, the separator layer is a constitutional element configured to prevent the positive electrode and the negative electrode from being in contact with each other. For example, the separator layer may include a separator, a solid electrolyte membrane or both.

According to an embodiment of the present disclosure, the negative electrode and the separator layer are not particularly limited, as long as they may be used for a lithium sulfur battery without detracting from the objects of the present disclosure. Therefore, detailed description of the negative electrode and the separator layer will be omitted herein.

According to an embodiment of the present disclosure, the negative electrode may include lithium metal.

According to an embodiment of the present disclosure, the lithium sulfur battery may include an electrode assembly including the positive electrode, the negative electrode and the separator layer, and a casing in which the electrode assembly is received together with an electrolyte. Herein, the electrolyte may include a lithium salt and a nonaqueous solvent, and may further include any additive, if necessary.

According to an embodiment of the present disclosure, the lithium salt is not particularly limited, as long as it may be used conventionally for an electrolyte of a lithium sulfur battery. Particular examples of the lithium salt may include, but are not limited to: $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiC_4BO_8$, $LiAsF_6$, $LiSbF_6$, $LiAlCl_4$, $CH_3SO_3Li$, $CF_3SO_3Li$, $(CF_3SO_2)_2NLi$, $(C_2F_5SO_2)_2NLi$, $(SO_2F)_2NLi$, $(CF_3SO_2)_3CLi$, lithium chloroborate, lithium lower aliphatic carboxylate, lithium tetraphenylborate, lithium imide, or two or more of them.

According to an embodiment of the present disclosure, the nonaqueous solvent is not particularly limited, as long as it may be used conventionally for an electrolyte of a lithium sulfur battery. Particular examples of the nonaqueous solvent may include, but are not limited to: cyclic carbonate solvents, linear carbonate solvents, ester solvents, ketone solvents, or mixed solvents containing two or more of them.

According to an embodiment of the present disclosure, the separator is not particularly limited, as long as it may be used as a separator of a lithium sulfur battery. For example, the separator may include a porous polyolefin substrate, and if necessary, may further include inorganic particles on at least one surface of the porous polyolefin substrate. In addition, the separator may further include a binder for binding the inorganic particles, if necessary.

According to another embodiment of the present disclosure, the solid electrolyte layer may be a film-shaped electrolyte membrane including a solid electrolyte, and if necessary, may further include a binder for binding the solid electrolyte. The solid electrolyte is not particularly limited, as long as it may be used conventionally for a lithium sulfur battery. Particular examples of the solid electrolyte may include a polymeric solid electrolyte, an inorganic solid electrolyte or a mixture thereof.

According to an embodiment of the present disclosure, the outer shape of the lithium sulfur battery may be selected from a coin-like shape, a cylindrical shape, a pouch-like shape or a prismatic shape with no particular limitation. In addition, the lithium sulfur battery may be used not only for a battery cell used as a power source of a compact device but also for a unit cell in a middle- or large-scale battery module including a plurality of battery cells, and the application thereof is not particularly limited.

According to an embodiment of the present disclosure, the lithium sulfur battery using the positive electrode including the above-described sulfur-carbon composite can realize an excellent effect in terms of the energy density of the battery, but the effect of the present disclosure is not limited thereto.

According to an embodiment of the present disclosure, the lithium sulfur battery can provide an effect of improving the energy density by increasing the sulfur loading amount in the electrode and reducing the amount of the electrolyte, but the effect of the present disclosure is not limited thereto.

According to an embodiment of the present disclosure, the lithium sulfur battery may have an electrolyte/sulfur (E/S) ratio of 10 $\mu$L/mg or less. For example, the E/S ratio of the lithium sulfur battery may be 10 $\mu$L/mg or less, 8 $\mu$L/mg or less, 6 $\mu$L/mg or less, 4 $\mu$L/mg or less, or 2 $\mu$L/mg or less. According to the related art, there is a limitation in reducing the E/S ratio due to the low activity of a positive electrode. However, according to the present disclosure, the E/S ratio is reduced stably. Therefore, it is apparent to those skilled in the art that the E/S ratio of the lithium sulfur battery according to the present disclosure may have a value larger than the above-defined range, and the lower limit of the E/S ratio is not limited.

According to another embodiment of the present disclosure, the lithium sulfur battery may have an energy density ($W_G$) of 100 Wh/g or more. For example, the lithium sulfur battery may have an energy density of 100 Wh/g or more, 150 Wh/g or more, 200 Wh/g or more, 250 Wh/g or more, 300 Wh/g or more, or 350 Wh/g or more, but the scope of the present disclosure is not limited thereto.

MODE FOR DISCLOSURE

Hereinafter, the lithium-sulfur battery using the sulfur-carbon composite according to an embodiment of the present disclosure will be explained in more detail with reference to Examples. However, the following Examples are for illustrative purposes only, and the scope of the present disclosure is not limited thereto.

**[Manufacture of Lithium Sulfur Battery]**

**Comparative Example 1**

First, rGO (reduced graphene oxide) having a BET specific surface area of 428 $m^2$/g, pore volume of 2.84 $cm^3$/g and an average pore diameter ($D_{50}$) of 26.58 nm was prepared as a porous carbonaceous matrix, and then 15 wt% of the porous carbonaceous matrix was mixed with 85 wt% of sulfur ($S_8$) and heat treated to provide a sulfur-carbon composite including sulfur supported inside of the pores of rGO and on the external surface thereof.

The specific surface area and pore volume of the porous carbonaceous matrix were determined through the BET (Brunauer-Emmett-Teller) 6-point method based on the nitrogen gas adsorption flowmetry using a porosimetry analyzer (Bell Japan Inc., Belsorp-II mini). In addition, the average pore diameter ($D_{50}$) was determined by the laser diffraction method.

Manufacture of Positive Electrode

First, 90 wt% of the sulfur-carbon composite prepared as described above, 5 wt% of denka black as a conductive material and 5 wt% of styrene-butadiene rubber/carboxymethyl cellulose (SBR:CMC, weight ratio = 7:3) as a binder were mixed to prepare a positive electrode slurry composition.

The resultant positive electrode slurry composition was applied onto an aluminum current collector having a thickness of 20 $\mu$m and dried at 50°C for 12 hours to obtain a positive electrode.

Manufacture of Lithium Sulfur Battery

The positive electrode prepared as described above and lithium metal (thickness 35 $\mu$m) as a negative electrode were positioned in such a manner that they might face each other, a separator (polyethylene, thickness 20 $\mu$m, porosity 45 vol%) was interposed between both electrodes, and 70 $\mu$L of an electrolyte was injected to obtain a lithium sulfur battery.

**Comparative Example 2**

A lithium sulfur battery was obtained in the same manner as Comparative Example 1, except that rGO having a BET specific surface area of 494 $m^2$/g, pore volume of 3.75 $cm^3$/g and an average pore diameter ($D_{50}$) of 30.5 nm was used as a porous carbonaceous matrix for preparing a sulfur-carbon composite.

**Comparative Example 3**

Sheet-like graphene was obtained as a porous carbonaceous matrix through the thermal reduction as follows.

First, graphene oxide (SE2430, available from sixth element Co.) was preliminarily heat treated under inert atmosphere at a temperature of 400°C for 10 minutes and further heat treated at a temperature of 900°C for 3 hours to obtain thermally expanded reduced graphene oxide (TE-rGO). The resultant porous carbonaceous matrix had a BET specific surface area of 921 $m^2$/g, pore volume of 5.13 $cm^3$/g and an average pore diameter ($D_{50}$) of 22.28 nm.

Then, a lithium sulfur battery was obtained in the same manner as Comparative Example 1, except that 20 wt% of the porous carbonaceous matrix obtained as described above was mixed with 80 wt% of sulfur ($S_8$).

**Example 1**

A lithium sulfur battery was obtained in the same manner as Comparative Example 1, except that sheet-like rGO having a BET specific surface area of 1,023 $m^2/g$, pore volume of 6.99 $cm^3/g$ and an average pore diameter ($D_{50}$) of 24.91 nm was obtained through the thermal reduction, and 10 wt% of rGO having the above-mentioned characteristics was used as a porous carbonaceous matrix and mixed with 90 wt% of sulfur ($S_8$).

**[Structural Analysis of Porous Carbonaceous Matrix]**

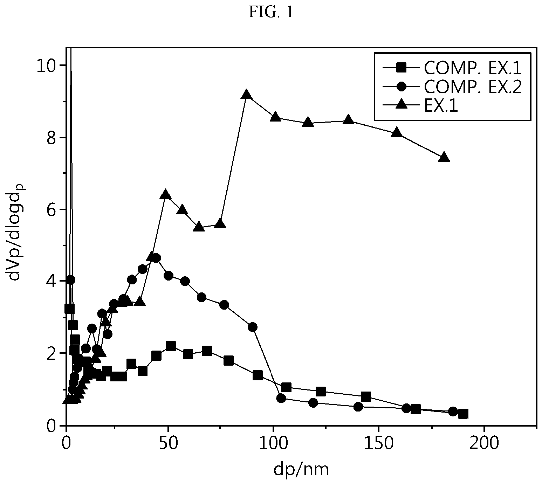

The porous carbonaceous matrix used for preparing the sulfur-carbon composite in manufacturing the lithium sulfur battery according to each of Example 1 and Comparative Examples 1-3 was determined in terms of BET specific surface area, pore volume and average pore diameter by using a BET analyzer (Belsorp-max). The results are shown in FIG. 1.

After the analysis, it can be seen that the porous carbonaceous matrix according to Example 1 has a specific surface area of 1,000 $m^2/g$ or more, while Comparative Examples 1-3 show a specific surface area of less than 1,000 $m^2/g$, and particularly, Comparative Examples 1 and 2 show a significantly smaller specific surface area of 500 $m^2/g$ or less.

In addition, it can be seen that the porous carbonaceous matrix according to Example 1 has a total pore volume of 6 $cm^3/g$ or more, while Comparative Examples 1-3 show a pore volume of less than 6 $cm^3/g$, and particularly, Comparative Examples 1 and 2 show a significantly lower pore volume of 2.84 $cm^3/g$ (Comparative Example 1) and 3.75 $cm^3/g$ (Comparative Example 2).

Further, Example 1 and Comparative Examples 1-3 include mesopores having a pore diameter equal to or larger than 1 nm and less than 50 nm and macropores having a pore diameter of 50 nm or more, and are determined to have an average pore diameter ($D_{50}$) of 24.91 nm (Example 1), 26.58 nm (Comparative Example 1), 30.5 nm (Comparative Example 2) and 22.28 nm (Comparative Example 3).

The results are shown in the following Table 1.

[Table 1]

| Porous carbonaceous matrix | Ex. 1 | Comp. Ex. 1 | Comp. Ex. 2 | Comp. Ex. 3 |
|---|---|---|---|---|
| BET specific surface area ($m^2/g$) | 1023 | 428 | 494 | 921 |
| Pore volume ($cm^3/g$) | 6.99 | 2.84 | 3.75 | 5.13 |
| Average pore diameter ($D_{50}$) (nm) | 24.91 | 26.58 | 30.5 | 22.28 |

**[Evaluation of Performance of Lithium Sulfur Secondary Battery]**

Evaluation of Capacity

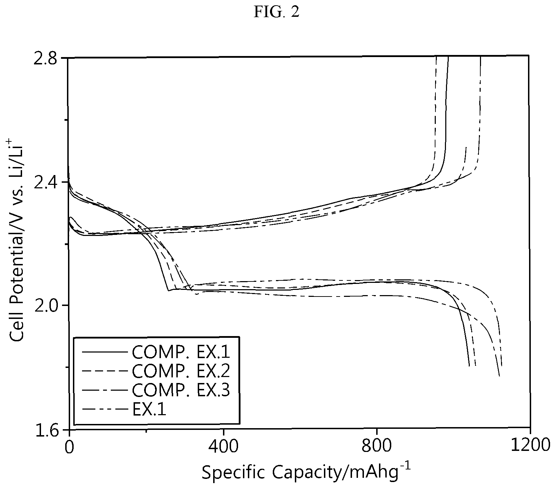

The lithium sulfur battery according to each of Example 1 and Comparative Examples 1-3 was charged/discharged by using a charge/discharge tester (PNE solution Co.) at 25°C and at a charge/discharge rate of 0.1 C/0.1 C in a voltage range of 1.7-3.0 V (vs. Li/Li$^+$) to evaluate the capacity characteristics of the battery. The results of evaluation of the battery capacity characteristics are shown in FIG. 2.

As can be seen from FIG. 2, although each of Comparative Examples 1-3 has a higher content of porous carbonaceous matrix in the sulfur-carbon composite, it shows a lower discharge capacity as compared to Example 1 having a lower content of porous carbonaceous matrix. Particularly, in the case of Comparative Examples 1 and 2, they show a significantly low discharge capacity and provide poor high-rate operability. On the contrary, it can be seen that Example 1 shows a significantly improved discharge capacity and can provide a battery capable of high-rate operation.

Evaluation of Life

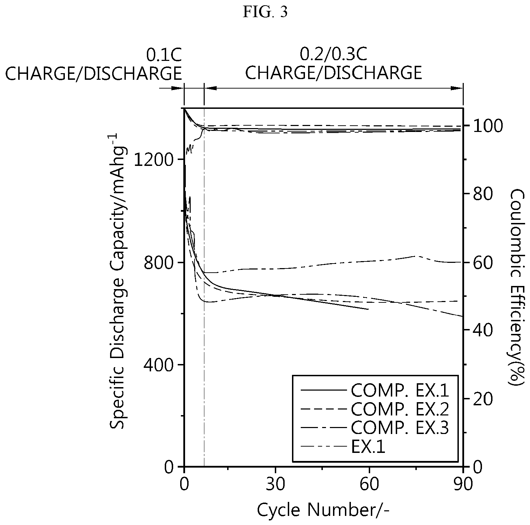

The lithium sulfur battery according to each of Example 1 and Comparative Examples 1-3 was charged/discharged six times repeatedly by using a charge/discharge tester (PNE solution Co.) at 25°C and at a current density of 0.1 C and charged/discharged repeatedly at 0.2 C/0.3 C for 60 cycles to evaluate the life characteristics. The results of evaluation of the battery life characteristics are shown in FIG. 3.

As can be seen from FIG. 3, Example 1 shows a higher capacity retention after repeating charge/discharge cycles, as compared to Comparative Examples 1-3, and thus provides significantly higher life characteristics.

It is thought from the above results and Table 1 that the sulfur reactivity is lowered in Comparative Examples 1-3, since the porous carbonaceous matrix used in each battery has a small pore volume and cannot ensure a specific surface area sufficiently, and thus the battery provides not only lower capacity but also poor life characteristics. Therefore, it can be seen that only Example 1 provides a lithium sulfur battery suitable for high-rate operation.

Particularly, when using a porous carbonaceous matrix including a large amount of mesopores alone and having an increased specific surface area in a sulfur-carbon composite, the pore volume is not sufficient, thereby making it difficult to ensure an ion diffusion path and causing generation of over-voltage, which results in a lithium sulfur battery problematic in terms of normal operation.

**Claims**

1. A sulfur-carbon composite comprising:

   a porous carbonaceous matrix as a sulfur carrier; and
   a sulfur-containing compound supported at least partially in the pores of the porous carbonaceous matrix and on the external surface thereof,
   wherein the porous carbonaceous matrix comprises a sheet-like carbonaceous material and has a specific surface area of 1,000 $m^2$/g or more and a pore volume of 6 $cm^3$/g or more.

2. The sulfur-carbon composite according to claim 1, wherein the sheet-like carbonaceous material comprises graphene, graphene oxide, reduced graphene oxide (rGO), or a mixture of two or more of them.

3. The sulfur-carbon composite according to claim 1, wherein the porous carbonaceous matrix has a pore volume of 6-15 $cm^3$/g.

4. The sulfur-carbon composite according to claim 1, wherein the porous carbonaceous matrix comprises mesopores having an average diameter ($D_{50}$) equal to or larger than 1 nm and less than 50 nm and macropores having an average diameter ($D_{50}$) of 50-200 nm.

5. The sulfur-carbon composite according to claim 1, wherein the pores of the porous carbonaceous matrix have an average diameter ($D_{50}$) of 25 nm or less.

6. The sulfur-carbon composite according to claim 1, wherein the sulfur-containing compound comprises inorganic sulfur ($S_8$), lithium polysulfide ($Li_2S_n$, $1 \leq n \leq 8$), carbon-sulfur polymer ($(C_2S_x)_m$, $2.5 \leq x \leq 50$, $2 \leq m$ ), or a mixture thereof.

7. The sulfur-carbon composite according to claim 1, wherein the content of the sulfur-containing compound is 75 wt% or more based on the total weight of the sulfur-carbon composite.

8. A positive electrode comprising the sulfur-carbon composite as defined in any one of claims 1 to 7 as a positive electrode active material.

9. The positive electrode according to claim 8, which has a porosity of 70 vol% or less.

10. The positive electrode according to claim 8, which has a porosity of 30 vol% or less.

11. A lithium sulfur battery comprising a positive electrode, a negative electrode, and a separator layer interposed between the positive electrode and the negative electrode, wherein the positive electrode comprises the positive electrode as defined in claim 8.

FIG. 1

FIG. 2

FIG. 3

| INTERNATIONAL SEARCH REPORT | International application No. |
|---|---|
| | **PCT/KR2023/008778** |

**A.     CLASSIFICATION OF SUBJECT MATTER**

**H01M 4/36**(2006.01)i; **H01M 4/38**(2006.01)i; **H01M 4/13**(2010.01)i; **H01M 4/62**(2006.01)i; **H01M 10/052**(2010.01)i; **H01M 4/02**(2006.01)i

According to International Patent Classification (IPC) or to both national classification and IPC

**B.     FIELDS SEARCHED**

Minimum documentation searched (classification system followed by classification symbols)

H01M 4/36(2006.01); C01B 32/168(2017.01); C01B 32/194(2017.01); C01B 32/198(2017.01); C01B 32/20(2017.01); H01M 10/052(2010.01); H01M 4/133(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬황 전지(lithium-sulfur battery), 황-탄소 복합체(sulfur-carbon composite), 그래핀(graphene), 비표면적(specific surface area), 기공부피(pore volume)

**C.     DOCUMENTS CONSIDERED TO BE RELEVANT**

| Category* | Citation of document, with indication, where appropriate, of the relevant passages | Relevant to claim No. |
|---|---|---|
| X | KR 10-2020-0056308 A (LG CHEM, LTD.) 22 May 2020 (2020-05-22)<br>    See paragraphs [0083] and [0085]-[0086]; claims 15 and 17; and table 1. | 1-11 |
| X | KR 10-2021-0091520 A (LG ENERGY SOLUTION, LTD.) 22 July 2021 (2021-07-22)<br>    See paragraphs [0046], [0048] and [0050]-[0051]; example 1; and claims 1, 13 and 15. | 1-11 |
| A | KR 10-2020-0132248 A (LG CHEM, LTD.) 25 November 2020 (2020-11-25)<br>    See entire document. | 1-11 |
| A | KR 10-2018-0036868 A (KOREA ELECTRONICS TECHNOLOGY INSTITUTE et al.) 10 April 2018 (2018-04-10)<br>    See entire document. | 1-11 |
| A | DU, Zhenzhen et al. The correlation between carbon structures and electrochemical properties of sulfur/carbon composites for Li-S batteries. Journal of Power Sources. 2017, vol. 341, pp. 139-146.<br>    See entire document. | 1-11 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 September 2023** | **25 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/008778**

| Patent document cited in search report | | | Publication date (day/month/year) | Patent family member(s) | | | Publication date (day/month/year) |
|---|---|---|---|---|---|---|---|
| KR | 10-2020-0056308 | A | 22 May 2020 | CN | 112823138 | A | 18 May 2021 |
| | | | | EP | 3848329 | A1 | 14 July 2021 |
| | | | | EP | 3848329 | A4 | 17 November 2021 |
| | | | | JP | 2022-505642 | A | 14 January 2022 |
| | | | | JP | 7176110 | B2 | 21 November 2022 |
| | | | | US | 2022-0002158 | A1 | 06 January 2022 |
| | | | | WO | 2020-101276 | A1 | 22 May 2020 |
| KR | 10-2021-0091520 | A | 22 July 2021 | CN | 114586196 | A | 03 June 2022 |
| | | | | EP | 4030507 | A1 | 20 July 2022 |
| | | | | EP | 4030507 | A4 | 07 December 2022 |
| | | | | JP | 2023-501679 | A | 18 January 2023 |
| | | | | US | 2022-0384788 | A1 | 01 December 2022 |
| | | | | WO | 2021-145633 | A1 | 22 July 2021 |
| KR | 10-2020-0132248 | A | 25 November 2020 | None | | | |
| KR | 10-2018-0036868 | A | 10 April 2018 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220076854

- KR 1020230073152